(19) Europäisches Patentamt
European Patent Office
Office européen des brevets

(11) **EP 3 657 203 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(51) Internationale Patentklassifikation (IPC):
*G01S 7/481* (2006.01)   *G01S 7/4861* (2020.01)
*G01S 7/4865* (2020.01)   *G01S 7/497* (2006.01)
*G01S 17/10* (2020.01)   *G01S 17/88* (2006.01)

(21) Anmeldenummer: **18207757.8**

(22) Anmeldetag: **22.11.2018**

(52) Gemeinsame Patentklassifikation (CPC):
**G01S 7/4814; G01S 7/4818; G01S 7/4861; G01S 7/4865; G01S 7/4866; G01S 7/497; G01S 17/10; G01S 17/88**

(54) **ELEKTROOPTISCHER ENTFERNUNGSMESSER UND ENTFERNUNGSMESSVERFAHREN**

ELECTRO-OPTICAL DISTANCE METER AND DISTANCE MEASUREMENT METHOD

TÉLÉMÈTRE ÉLECTROOPTIQUE ET PROCÉDÉ DE TÉLÉMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.05.2020 Patentblatt 2020/22**

(73) Patentinhaber: Hexagon Innovation Hub GmbH
**9435 Heerbrugg (CH)**

(72) Erfinder:
• **STUTZ, Herr Reto**
**CH-9434 Au (CH)**
• **HINDERLING, Jürg**
**CH-9437 Marbach (CH)**
• **WALSER, Herr Andreas**
**CH-9000 St.Gallen (CH)**

(74) Vertreter: **Kaminski Harmann**
**Patentanwälte AG**
**Landstrasse 124**
**9490 Vaduz (LI)**

(56) Entgegenhaltungen:
EP-A1- 3 339 901   WO-A1-2014/045655
WO-A1-88/05922   DE-A1- 102010 013 751
JP-A- 2010 203 877   KR-A- 20130 015 893

• HANZHONG WU ET AL: "Absolute distance measurement in a combined-dispersive interferometer using a femtosecond pulse laser", MEASUREMENT SCIENCE AND TECHNOLOGY, IOP, BRISTOL, GB, vol. 27, no. 1, 24 November 2015 (2015-11-24), pages 15202, XP020292063, ISSN: 0957-0233, [retrieved on 20151124], DOI: 10.1088/0957-0233/27/1/015202
• JANG YOON-SOO ET AL: "Absolute distance measurement with extension of nonambiguity range using the frequency comb of a femtosecond laser", OPTICAL ENGINEERING, SOC. OF PHOTO-OPTICAL INSTRUMENTATION ENGINEERS, BELLINGHAM, vol. 53, no. 12, 1 December 2014 (2014-12-01), pages 122403, XP060048213, ISSN: 0091-3286, [retrieved on 20140508], DOI: 10.1117/1.OE.53.12.122403
• BOUDREAU SYLVAIN ET AL: "Remote range resolved chemical detection using dual comb interferometry", CLEO: 2013, THE OPTICAL SOCIETY, 9 June 2013 (2013-06-09), pages 1 - 2, XP032602211, DOI: 10.1364/CLEO_SI.2013.CW3L.5
• KI-NAM JOO ET AL: "Distance measurements by combined method based on a femtosecond pulse laser", OPTICS EXPRESS, vol. 16, no. 24, 24 November 2008 (2008-11-24), US, pages 19799, XP055604994, ISSN: 1094-4087, DOI: 10.1364/OE.16.019799

**Beschreibung**

Die Erfindung betrifft einen elektrooptischen Entfernungsmesser nach Anspruch 10 und ein Verfahren zur Entfernungsmessung nach Anspruch 1.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel, dessen Distanz es zu bestimmen gilt, auszusenden und nachfolgend ein Echo von diesem Ziel als rückstreuendem Objekt zu empfangen. Um den zur Vermessung angezielten Punkt auf dem Zielobjekt erkennbar zu machen, kann dabei sichtbares Licht verwendet werden. Die zurückgeworfene optische Strahlung wird im Gerät von einem photosensitiven Element in ein elektrisches Signal umgewandelt. Vielfach befinden sich dabei im optischen Sende- bzw. Empfangspfad optische Komponenten zur Strahlformung, Umlenkung, Filterung, etc. - wie etwa Linsen, Wellenlängenfilter, Spiegel, usw.

Die Distanz zum zu vermessenden Ziel kann beispielsweise anhand der Laufzeit des Pulses oder Sendemusters, und/oder der Phase des Pulses innerhalb eines Modulationszyklus bestimmt werden. Solche Laserdistanzmesser haben sich mittlerweile in vielen Bereichen, z.B. der Geodäsie oder industriellen Vermessung, als Standardlösungen durchgesetzt, z.B. in Form von Totalstationen, Laserscannern, EDMs oder Lasertrackern. Um eine entsprechend hohe Genauigkeit der Distanzmessung zu erlangen, sind aufgrund der hohen Ausbreitungsgeschwindigkeit von optischer Strahlung im Freiraum die Anforderungen an das zeitliche Auflösungsvermögen zur Distanzmessung recht hoch. Beispielsweise ist bei typischen Messdistanzen für eine Distanzauflösung von 1 mm oder deutlich darunter eine Zeitauflösung mit einer Genauigkeit von mindestens etwa 6,6 Pico-Sekunden erforderlich.

Für ein möglichst deutliches und damit präzise auswertbares Empfangssignal ist eine möglichst hohe Ausgangsleistung wünschenswert. Bezüglich der emittierbaren Signalleistung sind den hier behandelten elektrooptischen Geräten jedoch Grenzen vorgegeben. So bestimmt bei der Emission von Laserlicht die Augensicherheit eine maximal zulässige mittlere Signalleistung, welche emittiert werden darf. Um für die Messung dennoch hinreichend starke Signalintensitäten zu erhalten, welche vom Empfänger detektierbar sind, wird daher vorzugsweise im Pulsbetrieb gearbeitet. Es werden kurze Pulse mit hoher Spitzenleistung gefolgt von Pausen ohne Signalaussendung ausgesendet. Somit weist der zurückgeworfene Anteil der Pulse eine genügend hohe Intensität auf, um diese aus den Hintergrundstörungen und dem Rauschen, insbesondere auch bei Vorhandensein von Hintergrundlicht (Sonnenlicht, künstlicher Beleuchtung, etc.), mit hohem Signal-zu-Rauschverhältnis auswerten zu können.

Bekannte Lichtquellen mit zum System synchronen Puls- oder Modulationsfolgen hoher Spitzenleistung sind beispielsweise elektronisch gepulste Laserdioden oder superlumineszente Leuchtdioden kombiniert mit optischen Verstärkern. All diese Lichtquellen haben den Nachteil, dass die Pulse mehrere 100 Picosekunden lang sind und bei Messungen auf raue natürliche Oberflächen durch räumliche und chromatische Irregularitäten Distanzmessfehler von typisch 0.1mm bis 2mm erzeugen.

Bekannt sind Güte geschaltete (Q-switched) Festkörperlaser, mit recht kurzen Pulsen bis in den Bereich von 200ps, und einer Pulsrate von wenigen MHz. Ein Nachteil hingegen ist das zeitliche Rauschen der Pulsrate, dieses beträgt in der Regel 1% bis 5% des Pulsintervalls. Die Handhabung dieser Unregelmässigkeit in präzisen Distanzmesssystemen verlangt nach einer komplexen Vorrichtung und entsprechend anspruchsvollem Auswerteverfahren.

Bekannt sind dabei im Bereich der interferometrischen Entfernungsmessung mit Pulsbetrieb auch Distanzmesser mit stabilisiertem Frequenzkammlaser, z.B. aus der DE 10 2009 012 646 A1. Diese weisen für hochpräzise Entfernungsmessungen (ppm-Genauigkeit) abstimmbare Resonatoren auf, um die Pulsrate oder Pulsfrequenz zu stabilisieren -typischerweise bei Pulslängen um die 100fs-, so dass diese mit ppm-Genauigkeit geregelt ist, sowie eine CEP-Stabilisierung (carrier envelope phase). Diese Stabilisierung bewirkt Konstanz der optischen Wellenlänge und Phase. Nachteilig an derartigen Geräten bzw. Verfahren ist jedoch ebenfalls eine hohe Komplexität und damit einhergehender hoher Aufwand bei Herstellung, Verwendung und Wartung.

Zur Ermittlung der Laufzeit des Signals ist zum einen das so genannte Phasenmessprinzip bekannt, welches die Signallaufzeit durch Vergleich der Phasenlage der Amplitudenmodulation des gesendeten und empfangenen Signals ermittelt.

Zum anderen ist die so genannte Time-of-Flight (TOF) Methode bekannt, welche die Zeit zwischen dem Aussenden und Empfangen eines Lichtpulses ermittelt, wobei die Zeitmessung anhand der Flanke, des Spitzenwerts, oder einer anderen Charakteristik der Pulsform erfolgt. Unter Pulsform ist dabei ein zeitlicher Lichtintensitätsverlauf des Empfangssignals, speziell des empfangenen Lichtpulses - erfasst durch das photosensitive Element - zu verstehen. Dabei kann der Zeitpunkt des Sendens entweder anhand eines elektrischen Auslöseimpulses, des an den Sender angelegten Signals oder anhand des oben erwähnten Referenzsignals ermittelt werden.

In der Distanzmessung kann es dabei zu Mehrdeutigkeiten kommen, falls die Signallaufzeit den Kehrwert der Puls-Senderate übersteigt und somit mehrere identische Signale zugleich zwischen Gerät und Messobjekt unterwegs sind, wodurch ein Empfangspuls nicht mehr eindeutig seinem jeweiligen Sendepuls zugeordnet werden kann. Es ist somit ohne weitere Maßnahmen unklar, ob die Distanz oder die Teildistanz als Divisionsrest durch die Sendepulsperiode gemessen wurde.

Zur Detektion des zurückgestreuten Pulses werden zumeist zwei unterschiedliche Ansätze oder eine Kombination daraus verwendet.

Bei der Time-of-Flight Methode nach dem so genannten Schwellwertprinzip wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Der andere Ansatz der Time-of-Flight Methode basiert auf der Abtastung bzw. dem Sampling des rückgestreuten Pulses. Dieser Ansatz wird typischerweise bei schwachen rückgestreuten Signalen (z.B. Pulssignale) verwendet, wie sie beispielsweise durch grössere Messdistanzen bedingt werden, oder allgemein für eine Erhöhung der Messgenauigkeit. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können. Beim Ansatz der zeitlich sehr präzisen Abtastung bzw. dem Sampling des zurückgestreuten Signals, wird das vom Detektor erzeugte elektrische Signal mittels eines Analog-Digital-Wandlers ("Analog-Digital-Converter", ADC) in eine digitale Signalfolge umgewandelt.

Bei schnellen Analog-Digital-Wandlern (ADC) wird eine hohe Abtastrate in Verbindung mit einer hohen Auflösung der Signalamplitude (z.B. 1GS/s, 14bit) beispielsweise erreicht durch die Erzeugung mehrere ADC-Wandlungsstufen, z durch ein zeitliches Verschachteln ("interleave", "interleaving") mehrerer langsamer ADC-Wandlungsstufen, ein stufenweises Quantisieren der abgetasteten Signalamplituden ("pipeline", "pipelining"), oder kombiniert ein mehrstufiges Quantisieren der Signalabtastwerte von mehreren ADC-Wandlungsstufen. Nachteilig an derartigen ADCs bzw. derartigen Methoden ist der hohe Aufwand, welcher sich auch in hohen Herstellungskosten niederschlägt.

Aufgabe der Erfindung ist daher die Bereitstellung eines einfachen bzw. vereinfachten Entfernungsmessers und Entfernungsmessverfahrens, mit dem hochpräzise, insbesondere absolute, Distanzmessungen ermöglicht sind.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zur Entfernungsmessung. Im Rahmen des Entfernungsmessverfahrens erfolgt ein Aussenden von gepulster optischer Strahlung mit einer Pulsrate, welche vorzugsweise mindestens 1 MHz beträgt. Vorzugsweise wird dabei die Strahlung von einem Frequenzkamm-Laser erzeugt. Weiter erfolgen ein Empfangen eines von einem Zielobjekt zurückgeworfenen Anteils der optischen Strahlung mit einem photosensitiven elektrischen Empfangselement und ein Umwandeln in ein elektrisches Empfangssignal, ein Abtasten des, optional gefilterten, Empfangssignals mit einer Abtastrate, so dass anhand von dabei erzeugten Abtastpunkten ein digitalisiertes Signal erzeugt wird, sowie ein Auswerten des digitalisierten Signals zur Bestimmung der Signallaufzeit zwischen Aussenden und Empfangen zum Ermitteln der Entfernung anhand der Signallaufzeit.

Die Abtastrate ist dabei abhängig von der Pulsrate eingestellt, wobei vorzugsweise die Abtastrate mindestens zehnmal die Pulsrate beträgt. Weiter erfolgt das Abtasten über eine Mehrzahl empfangener Strahlungspulse. Hierzu wird vorzugsweise die Pulsrate, insbesondere fortwährend, gemessen und die Abtastrate, insbesondere fortwährend, in Abhängigkeit der gemessenen Pulsrate eingestellt. Optional wird dabei auch die sich ergebende Abtastrate mittels einer externen bzw. unabhängigen Zeitbasis (z.B. mit einem Zähler) absolut bestimmt. Alternativ werden Pulsrate und an diese angepasst auch die Abtastrate anhand vorgegebener Taktraten, insbesondere fortlaufend, eingestellt, wobei die Taktrate z.B. mittels eines unabhängigen Taktgenerators erzeugt wird.

Vorzugsweise wird die Abtastrate in einem solchen Verhältnis zur Pulsrate eingestellt, dass Abtastrate und Pulsrate zueinander phasenstarr sind. Vorzugsweise wird die Abtastrate dabei so eingestellt, dass sie ein nicht-ganzzahliges Vielfaches der Pulsrate ist, wobei für das Verhältnis von Abtastrate zu Pulsrate beispielsweise entweder gilt:

$$\text{Abtastrate} = \text{Pulsrate} * (N + 1/x)$$

oder:

$$\text{Abtastrate} = \text{Pulsrate} * (N - 1/x),$$

wobei N eine natürliche Zahl ist und x die Mehrzahl empfangener Strahlungspulse ist.

Optional ist die Abtastrate wesentlich kleiner als die Bandbreite der Empfangseinheit (Unterabtasten) und/oder das pulsratenabhängige Einstellen der Abtastrate erfolgt algorithmisch, also ein rechnerisches, auswerteseitiges Anpassen der Abtastrate - z.B. als Resampling- an die Pulsrate.

**EP 3 657 203 B1**

In einer Fortbildung wird das digitalisierte Signal erzeugt, indem die Abtastpunkte der Mehrzahl der empfangenen Strahlungspulse akkumuliert werden, wobei dies vorzugsweise bezüglich der einzelnen Strahlungspulse zuordnungslos erfolgt. Alternativ oder zusätzlich werden die Abtastpunkte herangezogen, um Parameterwerte von Polynomen zu optimieren, welche das Signal oder die Signalform beschreiben, insbesondere in Echtzeit.

Dabei erfolgt das Abtasten optional derart, dass sich die Abtastpunkte nach der Mehrzahl wiederholen und für das Erzeugen des digitalisierten Signals ein Vielfaches der sich wiederholenden Abtastpunkte herangezogen wird. Mit anderen Worten wiederholt sich ein Abtastmuster nach einer gewissen Anzahl an Abtastpunkten, so dass ein Abtasten der Pulse zu sich wiederholenden Zeitpunkten erfolgt und es wird dann beispielsweise über mehrere solcher Wiederholungen akkumuliert. Nach x Pulsen wiederholt sich also jeweils das Abtastraster an der Pulsform.

In einer weiteren Fortbildung erfolgt ein Einstellen einer (leichten) Asynchronizität der Abtastrate zur Pulsrate um einen zusätzlichen Bruchteil (y, z.B. als ppm ausgedrückt) grösser als ein Mehrfaches der Sendepulsrate, insbesondere höchstens ein Millionstel, so dass ein (kontrolliertes) Phasengleiten bzw. ein Abtasten ohne Wiederholung von Abtastpunkten erfolgt. Dieser Phase-Slip mittels Frequenzoffset ist optional auch mit dem oben beschriebenen Verhältnis von Abtastrate zu Pulsrate kombinierbar, formelhaft ausgedrückt also:

$$\texttt{Abtastrate = Pulsrate*(N$\pm$1/x)*(1+y)}$$

Optional wird dabei die Abtastrate akkumulierend um diesen Bruchteil von Abtastung zu Abtastung verschoben. Bei einer Akkumulation über eine Zeit $T_{ACC}$ verschiebt sich somit das Samplingraster um eine Zeit $\Delta T$ zum Laserpuls:

$$\Delta T = \texttt{ = y*T}_{\texttt{Acc}}$$

Als weitere Option werden etwaige Ambiguitäten bei der Entfernungsbestimmung mittels diskretem und/oder analogem Modulieren der Strahlungspulsfolge aufgelöst, wobei optional hierbei ein Bestimmen der Anzahl der Strahlungspulse zwischen Aussenden und Empfangen erfolgt.

Die Erfindung betrifft zudem einen elektrooptischen Entfernungsmesser, insbesondere Laser-Distanzmesser. Das Entfernungsmessgerät weist eine Strahlungsquelle zur Erzeugung von gepulster Strahlung mit einer Pulsrate auf, sowie ein optisches Objektiv und ein photosensitives Bauelement, insbesondere eine Photodiode, zum Empfang eines von einem Zielobjekt zurückgeworfenen Anteils der Strahlung und Umwandlung in ein Empfangssignal, und einen Analog-Digital-Wandler (ADC) zur Digitalisierung des Empfangssignals mittels Abtastung mit einer Abtastrate. Darüber hinaus weist der Entfernungsmesser eine elektronische Auswerteeinheit oder Auswerteelektronik auf, welche auf Basis einer Signallaufzeit anhand des digitalisierten Empfangssignals eine Entfernung zwischen Entfernungsmesser und Zielobjekt ermittelt, wobei die Entfernung vorzugsweise absolut messbar ist.

Der Entfernungsmesser weist weiter eine Abtastfunktionalität auf, bei deren Ausführung die Abtastrate abhängig von der Pulsrate eingestellt wird, wobei die Abtastrate vorzugsweise wenigstens zehnmal so gross ist wie die Pulsrate. Weiter erfolgt die Abtastung zur Digitalisierung des jeweiligen, für eine Entfernungsermittlung herangezogenen Empfangssignals über eine Mehrzahl x empfangener Strahlungspulse.

In einer bevorzugten Ausführungsform ist die Strahlungsquelle ein freilaufender, frequenzstabilisierungsloser Frequenzkammlaser. Optional ist der Frequenzkammlaser ausgebildet zur Erzeugung von Pulsen mit einer Pulsdauer zwischen 100fs und 10ps und/oder ausgebildet als Mikro-Frequenzkammlaser mit wenigstens einem monolithischen Mikroresonator (Optical Whispering-Gallery Mode Resonator).

Vorzugsweise ist der Entfernungsmesser ausgebildet, die Pulsrate, vorzugsweise fortlaufend, z.B. mittels eines geräteinternen Strahlungsdetektors, zu erfassen und die Abtastrate in Abhängigkeit der erfassten Pulsrate, insbesondere mittels einer Phasenregelschleife (PLL) einzustellen, vorzugsweise fortlaufend und/oder asynchron. Optional weist der Entfernungsmesser zur Einstellung der Abtastrate anhand der gemessenen Pulsrate einen ersten Taktgenerator, insbesondere eine Phasenregelschleife (PLL), auf, der mittels der erfassten Pulsrate die Abtastrate erzeugt, so dass der Laser als rauscharme Zeitbasis für den ersten Taktgenerator dient, wobei der erste Taktgenerator die Pulsrate einer weiteren Einheit weiter gibt, um die exakte Pulsrate des Lasers zu messen. Dies erfolgt beispielsweise in einem FPGA, welcher von einer genauen Zeitbasis (TCXO, OCXO) getaktet wird. Die Kenntnis der genauen Abtastrate ist Basis zur genauen Entfernungsermittlung.

Optional weist der Entfernungsmesser wenigstens einen unabhängigen Taktgenerator, insbesondere einen temperaturkompensierten (Kristall-)Oszillator (TCO bzw. TCXO oder OCXO), zur Erzeugung einer unabhängigen Taktrate auf. Bei Ausführung der Abtastfunktionalität können dann, vorzugsweise fortwährend, die Abtastrate und die Pulsrate basierend auf der Taktrate eingestellt werden. Zusätzlich oder alternativ kann anhand der Taktrate fortwährend die absolute Frequenz der Strahlung bestimmt werden, wobei der Entfernungsmesser ausgebildet ist, einen Abtast- zu Entfernungsfaktor laufend zu berechnen, so dass die Entfernungsbestimmung mit einem Skalenfehler kleiner als 10ppm, aber auch kleiner als 1ppm ermöglicht ist.

Optional weist das photosensitive elektrische Bauelement eine Bandweite im Gigahertzbereich auf, wobei es optional als Avalanche-Photodiode (APD) oder Single-Photon-Avalanche-Photodioden (SPAD)-Array ausgebildet ist. Als weitere Option weist der Entfernungsmesser einen faseroptischen Strahlungsverstärker und/oder ein internes Referenzziel auf, wobei anhand des Referenzziels ein optischer Referenzpfad zur absoluten Referenzierung der Entfernungsermittlung bereitstellbar ist.

Vorzugsweise weist der Entfernungsmesser zur Auflösung von Ambiguitäten bei der Ermittlung der Entfernung einen Modulator auf zur Modulation der Laserpulse, insbesondere ein variables optisches Dämpfungsglied (VOA) ausserhalb der Laserkavität zur Erzeugung eines amplitudenmodulierten Signals mit konstanter Frequenz. Eine Modulation erfolgt alternativ oder zusätzlich mittels eines Puls-Pickers, der beispielsweise bei einer ursprünglichen Pulsrate von 10MHz nur jeden neunten oder zehnten Puls in einen optischen Verstärker bzw. zur Emission auf das Ziel durchlässt. Als weitere Option zur Ambiguitätenauflösung weist das Gerät einen elekro-optischen Phasenschieber im Innern einer Kavität des Lasers zur Erzeugung wenigstens zweier unterschiedlicher Pulsfolgefrequenzen auf.

Optional ist der Entfernungsmesser zur spektralen Interferometrie ausgebildet. Dabei erfolgt als Option im Rahmen der Entfernungsbestimmung ein Frequenzabstimmen der Pulsrate, so dass mittels Pulsüberlapp Interferenz zwischen einem Referenzpuls und einem Empfangspuls nutzbar ist, und/oder ein spektrales Aufteilen der empfangenen Pulse mittels eines dispersiven Elements, insbesondere eines Gitters oder Virtual Imaged Phased Array (VIPA), und Intensitätsmessung mittels einer Kamera des Entfernungsmessers und/oder eine Reduktion des Pulsintervalls mittels einer empfangsseitigen Ringkavität des Entfernungsmessers, vorzugsweise im Referenzlichtpfad,und/oder ein Aufweiten der Pulsform (pulse stretching) mittels auskoppelnder Fabry-Perot Kavität und Gitter des Entfernungsmessers.

Das erfindungsgemässe Verfahren und die erfindungsgemässe Vorrichtung bieten den Vorteil, dass auch mit kostengünstigen Bauteilen, vor allem einem einfachen ADC und einfachen Frequenzkammlaser, präzise Entfernungsmessungen, bis hin zu Auflösungen im Mikrometer- oder Nanometerbereich, selbst bei grossen Entfernungen zum Ziel (500m oder mehr), ermöglich sind. Ein einfacher ADC ist u.a. durch eine vergleichsweise niedrige Samplingrate, niedrigen Leistungsverbrauch und systematische Fehlereinflüsse wie ungenaue interne Kalibration gekennzeichnet.

Durch das Koppeln oder Anpassen der Abtastrate an die Pulsrate können dennoch hohe, vielmehr erhöhte finale Samplingraten bzw. eine hohe Dichte an Abtastpunkten bereitgestellt werden, dies selbst bei Pulsraten im MHz-Bereich, wobei zur weiteren Verringerung der Komplexität bei der Mehrfachabtastung auf eine Zuordnung von Abtastpunkten zu den "originalen" Empfangssignalen verzichtet werden kann.

Frequenzkammlaser bieten dabei den Vorteil, dass aufgrund der sehr kurzen Pulsdauer die störenden Einflüsse sog. Speckles im Vergleich zu anderen Lasern drastisch reduziert sind, was sich besonders bei Zielen mit ungleichmässiger Oberfläche vorteilhaft auf die Messpräzision mit Signallaufzeit auswirkt. Der Frequenzkammlaser der Vorrichtung weist weder eine Pulsratenstabilisierung noch eine CEP Stabilisierung auf, dies reduziert die Komplexität, die Baugrösse und die Kosten erheblich. Frequenzkammlaser ohne Stabilisierung der Pulsrate und optischen Trägerphase haben extrem kurze Pulse und daher geringe räumliche und chromatische Irregularitäten. Mit dem vorgestellten Einstellen der Abtastrate in Abhängigkeit wird das Problem gelöst, dass die Laserpulsrate eines unstabilisierten Frequenzkammlasers an sich zum ppm- oder sub-ppm-genauen elektronischen Masteroszillator eines Distanzmesssystems asynchron läuft.

Ausserdem wird mit der vorliegenden Erfindung ein sog. Distanzzittern (distance jitter) weitgehend vermieden. Dies ist sogar derart gering, dass interferometrische Distanzmessungen ermöglicht sind, obwohl weder eine aktive Puls-zu-Puls-Stabilisierung noch eine Stabilisierung der optischen Phase erfolgt. Die kurzen Laserpulse, z.B. im Femtosekundenbereich, ermöglichen akkurate Einzelschussmessungen, auch auf kurze Distanzen (z.B. weniger als 20m) und auch mit geringer Anzahl an empfangenen Photonen pro Empfangspuls. Das sog. shot-noise-level einer Distanzmessung ist weit unterhalb eines Mikrometers.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen zeigen:

Fig. 1a,b      je eine beispielhafte Ausführungsform eines erfindungsgemässen Entfernungsmessers bzw. Entfernungsmessverfahrens;

Fig. 2      eine bevorzugte Ausführungsform eines frei oszillierenden Frequenzkammlasers;

Fig. 3      ein Beispiel für ein Einstellen der Abtastrate zur Pulsrate mit Akkumulation von Abtastpunkten;

Fig. 4      ein weiteres Beispiel für eine Signalakkumulation;

Fig. 5      ein Beispiel für ein zusätzliches Verschieben der Abtastrate relativ zur Pulsrate;

Fig. 6          eine erste Ausführungsform zur Auflösung von Messambiguitäten; und

Fig. 7a,b,c     weitere Ausführungsformen zur Auflösung von Messambiguitäten.

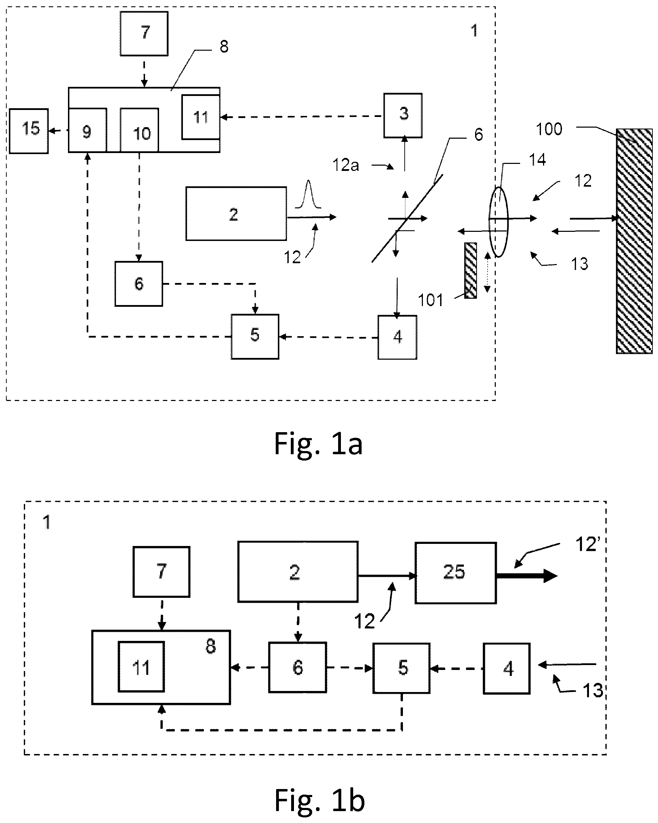

Figur 1a zeigt eine erste beispielhafte Ausführungsform eines erfindungsgemässen Entfernungsmessers 1 bzw. Entfernungsmessverfahrens. Der Entfernungsmesser 1 weist einen freilaufenden, vorzugsweise singlemodefaserbasierten, Frequenzkammlaser 2 auf, welcher Strahlungspulse 12 erzeugt. Die Strahlung 12 weist entsprechend eine gewisse Pulsrate auf, z.B. zwischen 5 und 25 MHz, wobei diese aufgrund des Freilaufs oder der fehlenden Frequenzstabilisierung des Lasers 2 nicht (dauerhaft) vorgegeben oder fixiert ist.

Vorzugsweise beträgt dabei die jeweilige Pulsdauer zwischen 100fs und 10ps, wobei die Pulslänge z.B. mittels dispergierender Elemente festlegbar ist. Als Option ist der Laser als Mikro-Frequenzkammlaser ausgebildet mit einem monolithischen Mikroresonator zur Erzeugung einer Soliton-Pulsfolge. Als weitere Option weist der Laser 2 eine optische, bspw. faserbasierte Verstärkereinheit auf, z.B. ein Erbium dotierter Faserverstärker (EDFA) mit Singlemode-Faser (siehe auch Figur 1b). Bei Peakleistungen über 5kW können Fasern mit grossem Kerndurchmesser von beispielsweise $25\mu m$ verwendet werden (nicht dargestellt), um unerwünschte Pulsverbreiterungen oder Sättigung zu vermeiden. Weitere Beispiele für verwendete optische Verstärker sind YDFA (Ytterbium dotierte Faserverstärker) oder solche basierend auf Bismut-dotierten Gläsern.

Die Laserpulse 12 werden über eine optische Objektivanordnung 14 auf ein Ziel 100 emittiert, wobei ein Teil der Pulse 12a mittels eines teildurchlässigen Spiegels 6s ausgekoppelt werden, so dass die Strahlung 12 teilweise auf einen Photodetektor 3, z.B eine GHz-Photodiode, gelenkt wird. Vom Ziel 100 zurückgeworfene Pulse 13 werden mittels einer Empfangseinheit, im Beispiel mittels des Objektivs 14 (oder einer zusätzlichen Empfangs- Objektivanordnung) und dem Spiegel 6s auf ein weiteres photosensitives elektrisches Bauelement 4 gelenkt. Der Detektor 4 weist vorzugsweise eine Bandweite im Gigahertzbereich auf und ist z.B. eine Avalanche-Photodiode (APD) oder ein Single-Photon-Avalanche-Photodiodenarray (SPAD). Der Detektor 4 verhält sich energiesensitiv, so dass die von den ultrakurzen Laserpulsen freigesetzten Elektronen nicht verlorengehen, sondern zum elektrischen Detektorsignal beitragen.

Als weitere, nicht dargestellte Option weist der Entfernungsmesser 1 empfängerseitig einen faseroptischen, z.B. dotierten Strahlungsverstärker auf. Das elektrische Empfangssignal des Photosensors 4 wird an einen Analog-Digital-Wandler (ADC) 5 transferiert, wo es mittels Abtasten mit einer Abtastrate (Sampling) digitalisiert wird. Optional weist der Entfernungsmesser 1 in an sich bekannter Weise dabei einen dem ADC 5 vorgeschalteten Signalfilter zur Verbesserung des Signal-Rauschverhältnisses auf.

Die Abtastrate ist dabei abhängig von der Pulsrate eingestellt, wobei die Abtastrate vorzugsweise mindestens das Zehnfache der Pulsrate beträgt. Im Beispiel erfolgt dieses pulsratenabhängige Einstellen, indem mittels des Detektors 3 und eines Zählers 11 die Pulsrate fortwährend (kontinuierlich) gemessen wird, wobei im Beispiel der Zähler 11 in einem Integrierten Schaltkreis (vorzugsweise Field Programmable Gate Array FPGA) 8 integriert ist, an die das Signal des Detektors 3 geleitet wird. Als präzise Referenzzeitbasis für den Zähler 11 dient z.B. ein TCX-Oszillator 7 mit Sub-ppm-Genauigkeit. Als Alternative wird die Pulsrate durch den ADC 5 selbst gemessen. Optional ist die Abtastrate kleiner als die Empfangs-Bandbreite.

Im Beispiel wird in Abhängigkeit des Messwerts des Zählers 11, also abhängig von der Pulsrate mittels eines Synthesizers 10 und einer Phasenregelschleife (PLL) 6 die Abtastrate des ADCs 5 phasenstarr oder (kontrolliert bzw. kontrollierbar) phasengleitend zur gemessenen Pulsrate eingestellt. Der Laser 2 dient also als rauscharme Zeitbasis für die taktgenerierende PLL. Dabei wird die Abtastrate anhand der jeweils aktuellen Laserpulsrate fortwährend gesteuert.

In alternativ möglichen Ausführungsformen mit einer geregelten, stabilen (damit aber aufwändigeren) Strahlungsquelle kann auf eine (fortwährende) Messung der Pulsrate verzichtet werden, und diese z.B. allenfalls beim (erstmaligen) Start und ggf. in grösseren Zeitabständen bestimmt werden.

Alternativ zur dargestellten Einstellen der Abtastrate anhand der gemessenen Pulsrate werden sowohl Abtastrate als auch Pulsrate von "aussen", z.B. mittels eines unabhängigen Taktgenerators 7, so eingestellt, dass die Abtastrate an die Pulsrate angepasst ist und z.B. Asynchronizität der Abtastrate zur Pulsrate gegeben ist, wobei unter Asynchronizität auch eine Pseudo-Asynchronizität verstanden wird. Auch kann auf jegliche gezielte oder aktive Regelung der Abtastrate und/oder der Pulsrate verzichtet werden, so dass Abtastrate und Pulsrate (zumindest mit sehr grosser Wahrscheinlichkeit bzw. bis auf vernachlässigbare Momente) "zufällig" unterschiedlich sind.

Ein Taktgenerator 7 wird optional verwendet, um anhand der Taktrate fortwährend die absolute Frequenz der Strahlung 12 bzw. 13 zu bestimmen, wobei der Entfernungsmesser 1 ausgebildet ist, einen Abtast- zu Entfernungsfaktor fortlaufend zu berechnen. Diese Option ermöglicht es, dass eine Bestimmung der Entfernung zum Ziel 100 mit einem Skalenfehler kleiner als 10ppm oder aber auch kleiner als 1ppm erfolgt.

Der ADC 5 tastet mit der in Abhängigkeit der Pulsrate eingestellten Abtastrate das Empfangssignal ab. Die Abtastung zur Erstellung eines digitalisierten Empfangssignals, anhand dessen mittels einer elektronischen Auswerteeinheit 15 schliesslich basierend auf Signallaufzeit zwischen Aussenden und Empfangen der Entfernungswert zum Ziel 100 bestimmt wird, erfolgt dabei über mehrere empfangene Strahlungspulse 13.

Die Abtastwerte des ADC 5 einer Mehrzahl an Pulsen 13 werden mittels eines Signalakkumulators 9 zusammengesetzt, insbesondere addiert, wobei auf eine Zuordnung von Abtastpunkten zu jeweiligen Pulsen 13 verzichtet wird. Es erfolgt also eine zuordnungslose Zusammenschau aller Abtastpunkte der Mehrzahl an Pulsen 13 mittels des Signalakkumulators 9. Somit entsteht eine Art künstliche Samplingrate, welche um einen Faktor x höher ist die eigentliche Abtastrate des ADC 5, wobei x die minimale Anzahl der abgetasteten Empfangspulse 13 angibt. Nach x Pulsen wiederholen sich die Abtastpunkte auf den Signalpulsen bzw. wiederholt sich das Abtastraster.

Durch die Akkumulation der Abtastwerte wird letztlich das analoge bzw. die analogen Empfangssignale 13 derart dicht abgetastet, so dass aus dem damit bereitgestellten digitalisierten Signal mit ausreichender Präzision die gesuchte Entfernung sehr genau bestimmbar ist. Die Anzahl x kann auch als Länge des Intervalls der Schwebungsfrequenz zwischen den beiden Frequenzen fs und flaser angesehen werden

$$x * S = (N+1) * P$$

mit N als einer natürlichen Zahl

bzw. als kleinstes gemeinsames Vielfaches.

Durch eine derartige Abtastung mit Akkumulation mitteln sich systematische Fehler wie Übersprechen (Crosstalk) oder ADC-Nichtlinearitäten der optischen und elektronischen Signalkanäle heraus. Die Entfernungsmessung ist daher frei von Störung und somit viel genauer als herkömmliche Distanzmesseinheiten. Optional dient dabei die gemessene und auf einen TCXO oder VCXO referenzierte Laserpulsrate auch als picosekundengenaue Zeitbasis für die Entfernungsmessung.

Als Alternative zu einem Akkumulieren der Abtastpunkte der Mehrzahl x von Pulsen 13 erfolgt anhand der Abtastpunkte der x Pulse 13 ein, insbesondere in Echtzeit ablaufendes, Optimieren von Parameterwerten von Polynomen, welche das digitalisierte Signal beschreiben. Die anhand von vielen Pulsen 13 gewonnenen Abtastpunkte dienen in dieser Variante also zur Erzeugung des digitalen Signals, indem anhand der Abtastwerte eine mathematische Beschreibung des Signals konkretisiert wird oder mit anderen Worten Stützwerte einer Funktionsrepräsentierung des gewünschten Signals bestimmt werden, wobei die Laserpulsrate die Abstände der Stützwerte angibt. Ein Vorteil einer solchen Art des algorithmischen, laserpulsratenabhängigen Einstellens der Abtastrate ist, dass das Signal bereits als Funktion verfügbar ist und nicht mehr umgewandelt werden muss, wodurch der Sampling-Memory vergleichsweise klein ist und zudem unabhängig von der Sampling-Frequenz.

Als weitere Alternative zu einem Akkumulieren der Abtastpunkte der Mehrzahl x von Pulsen 13 erfolgt anhand der Abtastpunkte der x Pulse 13 ein, ebenfalls in Echtzeit ablaufendes, Optimieren von Parameterwerten, welche die Laufzeit mittels Signaturen beschreiben, abgeleitet von den Empfangssignalen. Diese Signaldarstellung ist rein mathematisch, kann tabellarisch erfasst werden und spart Speicherplatz, weil die Sampling-Daten nur vorübergehend gespeichert werden.

In der beispielhaften Ausführungsform nach Figur 1a weist der Entfernungsmesser 1 ausserdem ein internes Referenzziel 101 auf. Dies ist in den Strahlengang einschwenkbar, so dass damit ein Referenzlichtweg bekannter Distanz bereitstellbar ist. Dies ermöglicht eine Bestimmung des Distanznullpunkts der Entfernungsmessung (z.B. vor Ort oder unmittelbar vor der Entfernungsmessung zum Ziel 100), so dass Entfernungen zwischen der Aufstellposition des Instruments und zu Zielen 100 absolut messbar sind.

Als weitere, nicht dargestellte Option ist der Entfernungsmesser 1 zur spektralen Interferometrie zur Entfernungsbestimmung ausgebildet. Dabei erfolgt im Rahmen der Entfernungsmessung beispielsweise ein Frequenzabstimmen der Pulsrate, so dass mittels Pulsüberlapp Interferenz zwischen einem internen Referenzpuls und einem Empfangspuls 13 nutzbar ist. Alternativ oder zusätzlich erfolgt ein spektrales Aufteilen der empfangenen Pulse 13 mittels eines dispersiven Elements, z.B. eines Gitters oder Virtual Imaged Phased Array (VIPA), und/oder eine Intensitätsmessung mittels einer Kamera, die der Entfernungsmesser 1 aufweist. Auch weist der Entfernungsmesser 1 optional eine Ringkavität auf zur empfangsseitigen Reduktion des Pulsintervalls und/oder eine stark auskoppelnde (high loss) Fabry-Perot Kavität und Gitter zum Aufweiten der Pulsform (sog. pulse stretching).

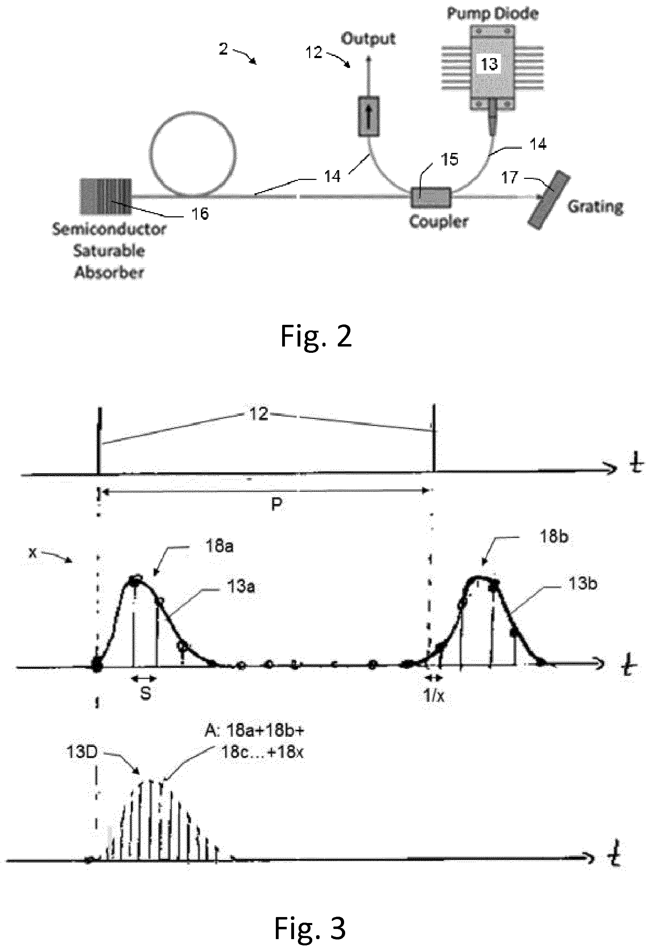

Figur 1b zeigt eine zweite beispielhafte Ausführungsform eines Entfernungsmessers 1. Zur Vereinfachung ist im Unterschied zur Figur 1a auf Darstellung u.a. des Ziels und von Optiken verzichtet. In diesem Beispiel wird die vom Frequenzkammlaser 2 erzeugte Strahlung 12 von einem optischen Verstärker 25, z.B. einem EDFA, verstärkt, so dass verstärkte Strahlungspulse 12' emittiert werden. Der Comb-Laser 2 dient also als Seedlaser für den optischen Verstärker 25. Zudem dient der Frequenzkammlaser 2, genauer die von ihm erzeugte Pulsrate, als Input für eine Phasenregelschleife 6 (hierzu ist im Frequenzkammlaser z.B. eine Photodiode zur Laserstrahlungsdetektion integriert). Die PLL 6 dient zur Steuerung oder Einstellung der Abtastrate des Analog-Digital-Wandlers 5 in Abhängigkeit der Pulsrate. Mittels des so eingestellten ADC 5 werden dann die mittels des photosensitiven Detektors 4 detektiertem Zielstrahlungspulse 13 digitalisiert. Die PLL 6 dient zudem als Input für ein FPGA 8 bzw. den darauf integrierten Zähler 11 dient. Als präzise Referenzzeitbasis für den Zähler 11 wird im Beispiel wiederum ein TCX-Oszillator 7 genutzt. Figur 2 zeigt schematisch eine bevorzugte Ausführungsform eines frei oszillierenden Frequenzkammlasers 2. Im Beispiel weist der faserbasierte Laser 2 eine Pump-Diode 13 auf, welche über Fasern 14 mittels eines Kopplers 15 die Leistung in die Kavität bestehend aus einem Reflektor 16 kombiniert mit einem sättigbaren Absorber (bonded Semiconductor Saturable Absorber -SESAM) und einem Gitter 17 als zweiten Reflektor koppelt.

Ein Abschnitt der Singlemode-Faser 14 ist beispielsweise Erbium dotiert. Diese Verstärkereinheit bewirkt zusammen mit der nichtlinearen Transmission des SESAM Locking zwischen den vielen spektralen Lasermoden und bewirkt im Eigenzustand niedrigster Ordnung eine stabile Pulsrate der Laseremission. Die Laserpulse 12 weisen dabei eine zeitliche Dauer von weniger als 10ps auf, typischerweise < 1ps. Die Pulsrate ist bestimmt durch die Laufzeit über die Lichtstrecke zwischen den beiden Resonatorspiegeln. Mittels einer Veränderung der optischen Weglänge zwischen den beiden Spiegeln kann optional die Laserpulsrate angepasst werden. Ein Prozentsatz der Leistung der Pulse wird über den Koppler 15 zum Ausgang 12 geleitet.

Der Laser 2 weist wie dargestellt weder eine Pulsratenstabilisierung noch eine CEP-Stabilisierung (CEP: carrier envelope phase) auf, was Komplexität, Baugrösse und Kosten vorteilhaft niedrig hält. Ein faserbasierter Laser 2 wie gezeigt hat darüber hinaus eine im Vergleich zu Festkörper-Freistrahl-Lasern hohe mechanische Stabilität z.B. gegenüber Vibrationen oder Erschütterungen, was besonders bei mobilen Entfernungsmessern von Vorteil ist.

Figur 3 veranschaulicht ein Beispiel für ein Einstellen der Abtastrate S zur Pulsrate P mit Akkumulation A von Abtastpunkten 18a,b im Rahmen des Entfernungsmessverfahrens. In den drei Teilen der Figur sind jeweils die Zeitachse als Rechtsachse dargestellt und eine Signalintensität als Hochachse.

Im oberen Teil der Figur 3 sind zwei der emittierten Pulse 12 dargestellt, welche mit einer als Zeitspanne symbolisierten Pulsrate P ausgesandt werden, wobei die Pulsrate P wie beschrieben vorzugsweise nicht fixiert/stabilisiert ist.

Im mittleren Teil der Figur 3 sind zwei Empfangspulse bzw. vielmehr das jeweilige zugehörige Empfangssignal 13a, 13b aus einer Mehrzahl x von empfangenen Pulsen bzw. Empfangssignalen dargestellt. Diese werden mit einer als Zeitspanne symbolisierten Abtastrate S abgetastet, so dass Abtastpunkte erzeugt werden, welche die relevanten Abtastpunkte 18a, 18b, 18c ... 18x der Empfangssignale 13a, 13b,..., 13x umfassen. Die Abtastrate S ist so in Abhängigkeit der Pulsrate P eingestellt, dass wie dargestellt zwischen zwei Empfangssignalpulsen eine Verschiebung um 1/x vorliegt. Im Beispiel gilt P: S=P*(N+1/x), wobei N eine natürliche Zahl ist, und vorzugsweise mindestens gleich 100 ist, z.B. 500, 1000 oder mehr.

Mit anderen Worten ist die Abtastrate ein nicht-ganzzahliges Vielfaches der Pulsrate (Phasenstarre), wobei im Beispiel der Versatz an die Anzahl der für eine Akkumulation von Pulsen 13a-13x bzw. deren Abtastpunkte 18a-18x angepasst ist. Nach einer Anzahl x wiederholen sich dann die Abtastpunkte 18a-18x in Bezug auf die zeitliche Position auf den Empfangssignalen. Das Abtastmuster wiederholt sich nach x emittierten Signalen. Eine Messung umfasst in der Regel mehrere solcher Zyklen, eine kürzeste sinnvolle Messung hoher Qualität umfasst genau einen Zyklus einer Anzahl x.

Im unteren Teil der Figur 3 ist das Akkumulieren A der Abtastpunkte 18a-18x dargestellt. Die Abtastpunkte 18a-18x werden zu einem digitalen Empfangspuls 13D zusammengesetzt, wobei das Zusammensetzen wie oben bereits erwähnt zuordnungslos erfolgt, d.h. aus welcher "Quelle", von welchem Empfangspuls 13a, 13b... oder 13x der jeweilige Abtastpunkt stammt, wird nicht übernommen. Das Zusammensetzen ist eine rein sequenzielle Aufreihung der empfangenen Signalpulse modulo x.

Optional wird die zuvor genannte Wiederholung der Abtastpunkte 18a-18x nach der Pulsmehrzahl x genutzt, um nicht nur einen "Durchgang" an Pulsen x zu akkumulieren, sondern alle Abtastpunkte Mx einer Anzahl M an Wiederholungen. Zum Beispiel ergeben sich bei M=4 Wiederholungen dann 4*x Abtastpunkte.

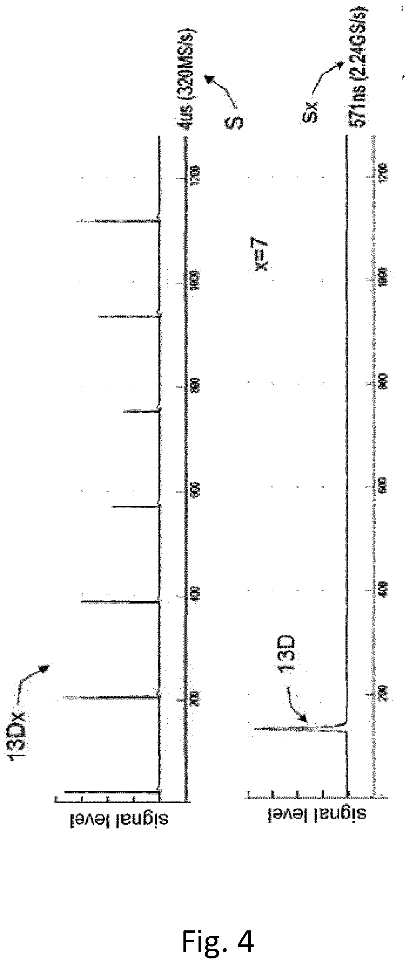

Figur 4 zeigt ein weiteres Beispiel für eine Signalakkumulation im Rahmen der ADC-Wandlung. Im oberen Teil der Figur 4 sind in zeitlicher Reihenfolge die einzelnen digitalisierten Abtastpulse oder digitalen Signalvektoren (DSV) 13Dx gezeigt, wobei x im Beispiel sieben beträgt. Diese digitalen Signale 13Dx sind aus dem analogen Empfangspulsen durch Abtasten mit der Abtastrate S erzeugt, welche im Beispiel 320 Megasamples pro Sekunde (MS/s) beträgt.

Aus diesen x Digitalpulsen 13Dx wird durch vorzugsweise zuordnungsloses Akkumulieren (über den Zeitraum von 4μs) ein Gesamtdigitalpuls 13D erzeugt (unterer Teil der Figur 4). Durch das Zusammensetzen aller Abtastpunkte liegt eine Abtastung vor, welche einer Abtastrate S*x entspricht, die im Beispiel - da sieben Pulse 13Dx herangezogen werden - dem Siebenfachen der Originalabtastrate entspricht, im Beispiel also 2.24 Gigasamples pro Sekunde. Durch ein derartiges Vorgehen, mit dem eine vervielfachte Abtastrate bereitstellbar ist, wird eine präzise Entfernungsmessung ermöglicht auch mit einfachen, kostengünstigen Bauteilen eines Entfernungsmessers, darunter vor allem ein ADC-Wandler. Des Weiteren mitteln sich systematische Fehler des elektronischen Empfangskanals, welche synchrones Verhalten aufweisen, durch die asynchrone Erfassung der Empfangssignale heraus.

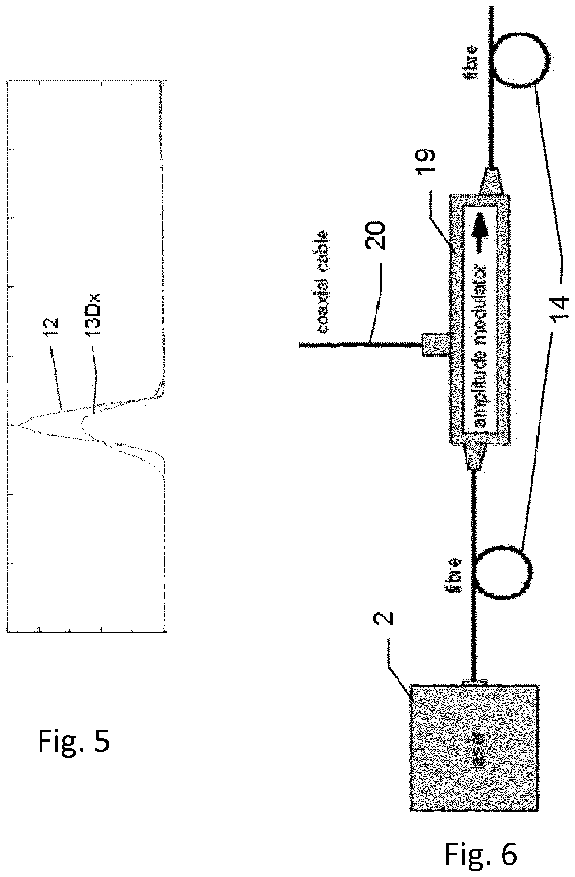

Figur 5 illustriert, wie als weiterbildende Option eine weitere Methode der Verschiebung des Abtastgitters realisiert werden kann. Diese zweite Methode kann kombiniert mit dem oben beschriebenen Verfahren sowie als eigenständiges Verschieben der Abtastrate relativ zur Pulsrate erfolgen. Die Verschiebung erfolgt dabei um einen Bruchteil von typisch kleiner als 1/x der Sendepulsfrequenz, z.B. um 0.5ppm bezogen auf die Pulsrate. Eine Kombination mit dem oben genannten Verfahren kann also z.B. wie folgt beschrieben werden:

$$S = P*(N-1/x)*(1+y)$$

wobei z.B. y = 0.5ppm

Als alleiniges Verfahren hingegen lässt sich dies wie folgt beschreiben:

$$S = P*N*(1+y).$$

Beispielsweise verschiebt sich bei einer Signalmesszeit oder Akkumulationszeit von 15ms das Abtastraster gegenüber dem Pulsmuster um total 0.5ppm*15ms = 7.5ns. Beim zuordnungslosen Zusammensetzen der Abtastpunkte zu einem einzigen digitalisierten Puls 13Dx ergibt sich eine leicht verwaschene oder verschmierte Impulsform. Dadurch vermischen sich die Subsamples bzw. Pulse 13Dx bereits nach wenigen Signalpulsen und eine ausreichende Verminderung oder Auslöschung von Wandlerfehlern wie Gain-Fehler, Timing-Fehler oder Offset-Fehler, welche insbesondere bei preisgünstigen AD-Wandlern ansonsten störend wirken, ist bereits nach kurzen Messzeiten gewährleistet.

Figur 6 ein Beispiel für eine Fortbildung des erfindungsgemässen Entfernungsmessers. Dargestellt sind ein Laser 2 sowie Fasern 14 zur Führung des zu emittierenden Laserlichts. Besonders bei hohen Pulsraten befinden sich bei der Entfernungsmessung mehrere Lichtpulse zwischen Vermessungsgerät und Ziel, was zu Distanzambiguitäten führt; es ist also keine eindeutige Zuordnung mehr eines Pulses zur Laufzeitmessung möglich. Um derartige Uneindeutigkeiten aufzulösen bzw. zu verhindern, weist der Entfernungsmesser im Beispiel der Figur 6 einen (faseroptischen) Amplitudenmodulator 19 als variables optisches Dämpfungsglied auf, welcher im Beispiel über ein Koaxialkabel 20 angesteuert wird. Mittels des Amplitudenmodulators 19 werden die Laserpulsamplituden derart (analog) moduliert, dass damit Laserpulse unterscheidbar werden. Es erfolgt also eine Modulation - im Beispiel der Amplituden- derart, dass Laserpulse, Pulsgruppen oder Umhüllende von Pulsabfolgen eindeutig identifizierbar sind. Die Distanz kann dadurch eindeutig bestimmt werden, auch bei Tausenden von Pulsen zwischen Vermessungsgerät und Ziel.

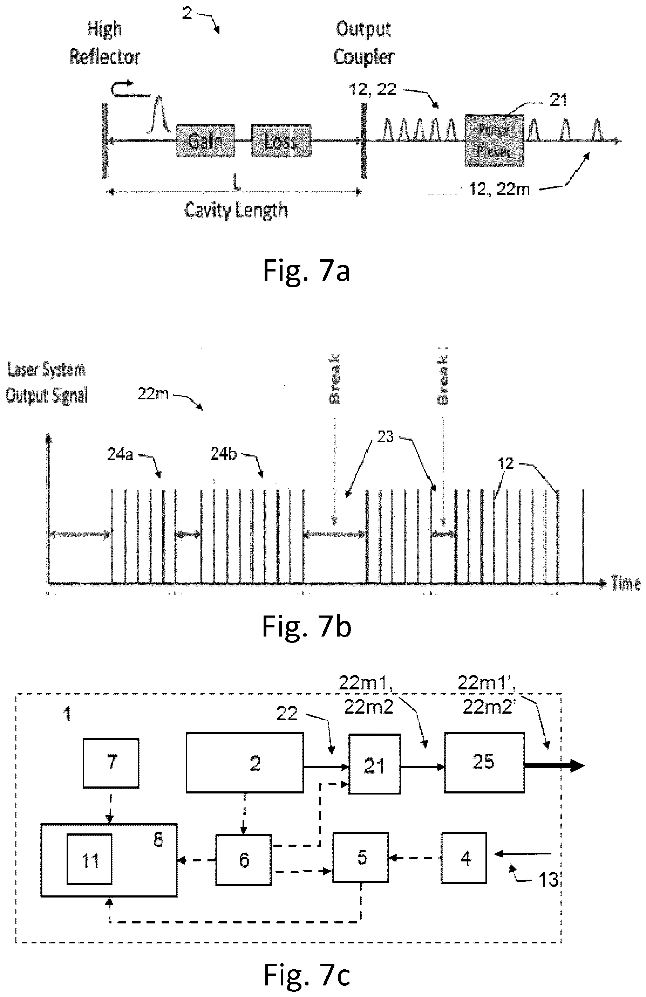

Die Figuren 7a und 7b zeigen eine weitere Form der Ambiguitätenauflösung. In diesem Beispiel erfolgt ein gezieltes Auswählen aus den vom Laser 2 erzeugten Pulsen 12. Hierfür weist das Gerät einen Puls-Picker 21 auf (Figur 7a), der aus der mit der Pulsrate erzeugten Folge der Laserpulse 22 Pulse 12 herauspickt bzw. einen Teil der Pulse 12 unterdrückt. Mittels dieser diskreten Modulation entsteht also eine modifizierte Pulsfolge 22m.

Figur 7b zeigt eine derart modulierte Pulsfolge 22m aus Strahlungspulsen 12. Die originale Pulsfolge (22 in Figur 7a) wird mittels Puls-Picking derart gezielt unterbrochen (Pfeile 23), dass damit eindeutig identifizierbare "Pakete" 24a und 24b von Pulsen 12 generiert werden, anhand derer etwaige Ambiguitäten auflösbar bzw. vermieden sind.

Die Amplitudenmodulation nach Figur 6 und ein Puls-Picking nach den Figuren 7a und 7b können auch kombiniert werden. Als weitere alternative oder zusätzliche Fortbildungen erfolgt ein Bestimmen der Anzahl an Pulsen 12 zwischen Aussenden und Empfangen. Als weitere nicht dargestellte Form weist der Laser 2 statt ausserhalb im Innern der Kavität einen elektro-optischen Phasenschieber auf, womit die Pulsrate veränderbar ist und wenigstens zwei unterschiedliche Pulsfolgefrequenzen bereitstellbar sind. Durch ein Messen der Empfangspulse mit wenigstens zwei solcher Frequenzen sind Ambiguitäten auflösbar -wobei die Differenzfrequenz der beiden Pulsfolgenfrequenzen die maximal mögliche Ambiguitätsdistanz vorgibt- und die Entfernung absolut bestimmbar.

Figur 7c zeigt in Anlehnung an Figur 1b einen Entfernungsmesser 1 mit Puls-Picker 21. Mittels des Puls-Pickers 21 wird die vom Laser 2 erzeugte Strahlung 12 bzw. Pulsfolge 22 moduliert, bevor sie vom optischen Verstärker 25 verstärkt wird, so dass eine modulierte und verstärkte Strahlungspulsfolge 22m1' emittiert wird. Das Puls-Picking erfolgt anhand eines Signals der PLL 6. Beispielsweise wird bei einer "originalen", vom Laser 2 erzeugten Pulsrate von 100 MHZ nur jeder 100. Puls durchgelassen, so dass Strahlung 22 mit einer effektive Pulsrate von 1MHz emittiert wird. Beträgt beispielsweise die (mittlere) Leistung des Lasers 1mW, beträgt diese nach dem Puls-Picker 1$\mu$W und wird danach vom Verstärker auf 10mW verstärkt.

Die PLL 6 regelt im Beispiel die Modulation der erzeugten Pulsfolge 22 zudem so, dass zusätzlich zur ersten Pulsfolge 22m1, z.B. mit jedem 100. Puls, eine zweite modulierte Pulsfolge 22m2 erzeugt wird, z.B. mit Durchlassen jedes 110. Pulses. Somit erfolgt zum einen eine Entfernungsmessung mit einer ersten Pulsfrequenz von z.B. 1 MHZ und zum anderen mit einer zweiten Frequenz von beispielsweise 909 kHZ. Das Auswerten der sich damit ergebenden synthetischen Zwischenfrequenz von 90.9kHZ löst Ambiguitäten auf einer Distanz von bis zu 1650m auf.

Es versteht sich, dass diese dargestellten Figuren nur mögliche Ausführungsbeispiele schematisch darstellen. Die verschiedenen Ansätze können ebenso miteinander sowie mit Vorrichtungen oder Verfahren des Stands der Technik kombiniert werden.

**Patentansprüche**

1. Verfahren zur Entfernungsmessung mit

- einem Aussenden von gepulster optischer Strahlung (12) mit einer Pulsrate (P, 22), insbesondere wobei die Pulsrate (P, 22) mindestens 1 MHz beträgt, und/oder die Strahlung (12) von einem Frequenzkamm-Laser (2) erzeugt wird,
- einem Empfangen eines von einem Zielobjekt (100) zurückgeworfenen Anteils der optischen Strahlung (13, 13a, 13b) mit einem photosensitiven elektrischen Empfangselement (4) und Umwandeln in ein elektrisches Empfangssignal (13a, 13b, 13c ... 13x),
- einem Abtasten des Empfangssignals (13a, 13b, 13c ... 13x) mit einer Abtastrate (S) zur Erzeugung von Abtastpunkten (18a, 18b, 18c ... 18x)
- einem Auswerten eines digitalisierten Signals (13D) zur Bestimmung der Signallaufzeit zwischen Aussenden und Empfangen zum Bestimmen der Entfernung anhand der Signallaufzeit,

**dadurch gekennzeichnet, dass**
die Abtastrate (S) in Abhängigkeit der Pulsrate (P, 22) eingestellt wird und das digitalisierte Signal (13D) durch Abtasten über Empfangssignale (13a, 13b, 13c ... 13x) einer Mehrzahl x empfangener Strahlungspulse (13) erzeugt wird, wobei die Abtastrate (S) in einem solchen Verhältnis zur Pulsrate (P, 22) eingestellt wird, dass die Abtastrate (S) ein nicht-ganzzahliges Vielfaches der Pulsrate (P, 22) ist.

2. Verfahren nach Anspruch 1,
   **dadurch gekennzeichnet, dass**
   die Abtastrate (S) mindestens zehnmal so gross ist wie die Pulsrate (P, 22).

3. Verfahren nach Anspruch 1 oder 2,
   **dadurch gekennzeichnet, dass**
   die Pulsrate (P, 22) gemessen wird und die Abtastrate (S) in Abhängigkeit der gemessenen Pulsrate (P, 22) eingestellt wird.

4. Verfahren nach einem der vorherigen Ansprüche,
   **dadurch gekennzeichnet, dass**
   die Pulsrate (P, 22) und daran angepasst die Abtastrate (S) anhand vorgegebener, insbesondere mittels eines unabhängigen Taktgenerators (7) erzeugten, Taktraten eingestellt werden.

5. Verfahren nach einem der vorherigen Ansprüche,
   **dadurch gekennzeichnet, dass**

   - für das Verhältnis von Abtastrate (S) zu Pulsrate (P, 22) entweder gilt: Abtastrate = Pulsrate*(N+1/x) oder: Abtastrate = Pulsrate*(N-1/x), mit N als einer natürlichen Zahl, und/oder
   - die Abtastrate (S) kleiner als die Bandbreite der Empfangseinheit ist.

6. Verfahren nach einem der vorherigen Ansprüche,
   **dadurch gekennzeichnet, dass**
   das digitalisierte Signal (13D) erzeugt wird, indem die Abtastpunkte (18a, 18b, 18c ... 18x) der Mehrzahl x der empfangenen Strahlungspulse (13)

   - akkumuliert werden, insbesondere bezüglich der einzelnen Empfangssignale (13a, 13b, 13c ... 13x) zuordnungslos, und/oder
   - herangezogen werden, um Parameterwerte mindestens eines das Signal (13D) beschreibenden Polynoms zu optimieren.

7. Verfahren nach Anspruch 6,
   **dadurch gekennzeichnet, dass**
   sich die Abtastpunkte (18a, 18b, 18c ... 18x) nach der Mehrzahl x wiederholen und für das Erzeugen des digitalisierten Signals (13D) Mx Abtastpunkte (18a, 18b, 18c ... 18x) herangezogen werden, mit M als einer natürlichen Zahl.

8. Verfahren nach einem der vorherigen Ansprüche,
   **dadurch gekennzeichnet, dass**
   die Abtastrate (S)

   - zur Pulsrate (P, 22) verschoben um einen Bruchteil kleiner als 1/x, insbesondere höchstens ein Millionstel, eingestellt wird und/oder

- algorithmisch eingestellt wird.

9. Verfahren nach einem der vorherigen Ansprüche,
**dadurch gekennzeichnet, dass**
zur Vermeidung von Ambiguitäten bei der Entfernungsbestimmung ein diskretes und/oder analoges Modulieren (23) einer Strahlungspulsfolge (22) erfolgt, insbesondere wobei hierbei ein Bestimmen der Anzahl der Strahlungspulse (12, 13) zwischen Aussenden und Empfangen erfolgt.

10. Elektrooptischer Entfernungsmesser (1), insbesondere Laser-Distanzmesser, mit

- einer Strahlungsquelle zur Erzeugung von gepulster Strahlung (12) mit einer Pulsrate (P, 22),
- einem Objektiv (14) und einem photosensitiven Bauelement (4), insbesondere eine Photodiode, zum Empfang eines von einem Zielobjekt (100) zurückgeworfenen Anteils der Strahlung (13) und Umwandlung in ein Empfangssignal (13a, 13b, 13c ... 13x),
- einem Analog-Digital-Wandler (5) zur Erzeugung von Abtastpunkten (18a, 18b, 18c ... 18x) mittels Abtastung des Empfangssignals (13a, 13b, 13c ... 13x) mit einer Abtastrate (S) und
- einer elektronischen Auswerteeinheit, welche auf Basis einer Signallaufzeit anhand eines digitalisierten Signals (13D) eine Entfernung zwischen Entfernungsmesser (1) und Zielobjekt (100), insbesondere absolut, bestimmt,

**dadurch gekennzeichnet, dass**
der Entfernungsmesser (1) eine Abtastfunktionalität aufweist, bei deren Ausführung die Abtastrate (S) in Abhängigkeit der Pulsrate (P, 22) eingestellt wird und das digitalisierte Signal (13D) durch Abtastung über die Empfangssignale (13a, 13b, 13c ... 13x) einer Mehrzahl x empfangener Strahlungspulse (13) erzeugt wird, wobei die Abtastrate (S) in einem solchen Verhältnis zur Pulsrate (P, 22) eingestellt wird, dass die Abtastrate (S) ein nicht-ganzzahliges Vielfaches der Pulsrate (P, 22) ist, insbesondere wobei die Abtastrate (S) mindestens zehnmal so gross ist wie die Pulsrate (P, 22).

11. Entfernungsmesser (1) nach Anspruch 10,
**dadurch gekennzeichnet, dass**
die Strahlungsquelle ein freilaufender, frequenzstabilisierungsloser Frequenzkammlaser (2) ist, insbesondere

- ausgebildet zur Erzeugung von Strahlungspulsen (12) mit einer Pulsdauer zwischen 100fs und 10ps und/oder
- ausgebildet als Mikro-Frequenzkammlaser mit einem monolithischen Mikroresonator.

12. Entfernungsmesser (1) nach Anspruch 10 oder 11,
**dadurch gekennzeichnet, dass**
der Entfernungsmesser (1) ausgebildet ist, die Pulsrate (P, 22) zu messen und die Abtastrate (S) in Abhängigkeit der gemessenen Pulsrate (P, 22), insbesondere mittels einer Phasenregelschleife (6) oder eines Synthesizers, einzustellen.

13. Entfernungsmesser (1) nach Anspruch einem der Ansprüche 10 bis 12,
**dadurch gekennzeichnet, dass**
der Entfernungsmesser (1) wenigstens einen unabhängigen Taktgenerator (7) zur Erzeugung einer unabhängigen Taktrate aufweist,

- wobei bei Ausführung der Abtastfunktionalität die Abtastrate (S) und die Pulsrate (P, 22) basierend auf der Taktrate eingestellt werden, und/oder
- so dass anhand der Taktrate fortwährend die absolute Frequenz der Strahlung (12) bestimmbar ist, und der Entfernungsmesser (1) ausgebildet ist, einen Abtastzu Entfernungsfaktor laufend zu berechnen, so dass die Entfernungsbestimmung mit einem Skalenfehler kleiner als 10ppm ermöglicht ist.

14. Entfernungsmesser (1) nach einem der Ansprüche 10 bis 13,
**dadurch gekennzeichnet, dass**

- das photosensitive elektrische Bauelement (4) eine Bandweite im Gigahertzbereich aufweist, insbesondere wobei es als Avalanche-Photodiode oder Single-Photon-Avalanche-Photodioden-Array ausgebildet ist, und/oder

- der Entfernungsmesser (1) einen faseroptischen Strahlungsverstärker aufweist und/oder
- der Entfernungsmesser (1) ein internes Referenzziel (101) aufweist, anhand dessen ein optischer Referenzpfad bereitstellbar ist, so dass eine absolute Referenzierung der Entfernungsermittlung ermöglicht ist.

15. Entfernungsmesser (1) nach einem der Ansprüche 10 bis 14,
**dadurch gekennzeichnet, dass**
zur Auflösung von Ambiguitäten bei der Ermittlung der Entfernung der Entfernungsmesser (1)

- einen Modulator (19, 21) zur Modulation der Laserpulse (12), insbesondere ein variables optisches Dämpfungsglied (VOA) und/oder einen Puls-Picker, und/oder
- einen elekro-optischen Phasenschieber im Innern einer Kavität des Lasers (2) zur Erzeugung wenigstens zweier unterschiedlicher Pulsfolgefrequenzen aufweist.

16. Entfernungsmesser (1) nach einem der Ansprüche 10 bis 15,
**dadurch gekennzeichnet, dass**
der Entfernungsmesser (1) zur spektralen Interferometrie im Rahmen der Entfernungsbestimmung ausgebildet ist, insbesondere wobei im Rahmen der Entfernungsbestimmung

- ein Frequenzabstimmen der Pulsrate (P, 22) erfolgt, so dass mittels Pulsüberlapp Interferenz zwischen einem Referenzpuls und einem Empfangspuls (13, 13a, 13b) nutzbar ist, und/oder
- ein spektrales Aufteilen der empfangenen Pulse (13, 13a, 13b) mittels eines dispersiven Elements, insbesondere eines Gitters oder Virtual Imaged Phased Array, und Intensitätsmessung mittels einer Kamera des Entfernungsmessers (1) und/oder
- eine Reduktion des Pulsintervalls mittels einer empfangsseitigen Ringkavität des Entfernungsmessers (1) und/oder
- ein Aufweiten der Pulsform mittels auskoppelnder Fabry-Perot Kavität und Gitter des Entfernungsmessers (1)

erfolgt.

## Claims

1. Method for distance measurement comprising

   - emitting pulsed optical radiation (12) with a pulse rate (P, 22), in particular wherein the pulse rate (P, 22) is at least 1 MHz and/or the radiation (12) is generated by a frequency comb laser (2),
   - receiving a portion of the optical radiation (13, 13a, 13b) reflected from a target object (100) with a photosensitive electrical receiving element (4) and converting said portion into an electrical receive signal (13a, 13b, 13c ... 13x),
   - sampling the receive signal (13a, 13b, 13c ... 13x) with a sampling rate (S) to generate sampling points (18a, 18b, 18c ... 18x),
   - evaluating a digitized signal (13D) to determine the signal propagation time between emission and reception to determine the distance based on the signal propagation time,

   **characterized in that**
   the sampling rate (S) is set dependent on the pulse rate (P, 22) and the digitized signal (13D) is generated by sampling receive signals (13a, 13b, 13c ... 13x) of a plurality x of received radiation pulses (13), wherein the ratio of the sampling rate (S) to the pulse rate (P, 22) is set such that the sampling rate (S) is a non-integer multiple of the pulse rate (P, 22).

2. Method according to Claim 1,
**characterized in that**
the sampling rate (S) is at least ten times as large as the pulse rate (P, 22).

3. Method according to Claim 1 or 2,
**characterized in that**
the pulse rate (P, 22) is measured and the sampling rate (S) is set dependent on the measured pulse rate (P, 22).

4.  Method according to any one of the preceding claims, **characterized in that**
    the pulse rate (P, 22) and, adapted thereto, the sampling rate (S) are set on the basis of predetermined clock rates, generated in particular by an independent clock generator (7).

5.  Method according to any one of the preceding claims, **characterized in that**

    ■ for the ratio of sampling rate (S) to pulse rate (P, 22) either of the following applies: sampling rate = pulse rate* (N+1/x) or: sampling rate = pulse rate*(N-1/x), with N as a natural number, and/or
    ■ the sampling rate (S) is less than the bandwidth of the receiving unit.

6.  Method according to any one of the preceding claims, **characterized in that**
    the digitized signal (13D) is generated by the sampling points (18a, 18b, 18c ... 18x) of the plurality x of the received radiation pulses (13)

    ■ being accumulated, in particular unassigned to the individual receive signals (13a, 13b, 13c ... 13x), and/or
    ■ being used to optimize parameter values of at least one polynomial describing the signal (13D).

7.  Method according to Claim 6,
    **characterized in that**
    the sampling points (18a, 18b, 18c ... 18x) repeat after the plurality x and Mx sampling points (18a, 18b, 18c ... 18X) are used for generating the digitized signal (13D), with M as a natural number.

8.  Method according to any one of the preceding claims, **characterized in that**
    the sampling rate (S)

    ■ is shifted in relation to the pulse rate (P, 22) by a fraction less than 1/x, in particular not greater than one millionth, and/or
    ■ is set algorithmically.

9.  Method according to any one of the preceding claims, **characterized in that**
    in order to avoid ambiguities in the distance determination, a discrete and/or analogue modulation (23) of a radiation pulse sequence (22) is performed, wherein in particular, the number of radiation pulses (12, 13) between emission and reception is determined.

10. Electro-optical distance meter (1), in particular laser distance meter, comprising

    ■ a radiation source for generating pulsed radiation (12) with a pulse rate (P, 22),
    ■ a lens (14) and a photosensitive component (4), in particular a photodiode, for receiving a portion of the radiation (13) reflected from a target object (100) and converting said portion into a receive signal (13a, 13b, 13c ... 13x),
    ■ an analogue-to-digital converter (5) for generating sampling points (18a, 18b, 18c ... 18x) by sampling the receive signal (13a, 13b, 13c ... 13x) with a sampling rate (S) and
    ■ an electronic analysis unit, which determines a distance, in particular an absolute distance, between the distance meter (1) and the target object (100) on the basis of a signal propagation time of the digitized signal (13D),

    **characterized in that**
    the distance meter (1) has a sampling functionality, which when executed sets the sampling rate (S) dependent on the pulse rate (P, 22) and the digitized signal (13D) is generated by sampling the receive signals (13a, 13b, 13c ... 13x) of a plurality x of received radiation pulses (13), wherein the ratio of the sampling rate (S) to the pulse rate (P, 22) is set such that the sampling rate (S) is a non-integer multiple of the pulse rate (P, 22), in particular wherein the sampling rate (S) is at least ten times as large as the pulse rate (P, 22).

11. Distance meter (1) according to Claim 10,
    **characterized in that**
    the radiation source is a freewheeling, non-frequency-stabilized frequency comb laser (2), in particular

    ■ designed to generate radiation pulses (12) with a pulse duration between 100fs and 10ps and/or

- designed as a microfrequency comb laser with a monolithic microresonator.

12. Distance meter (1) according to Claim 10 or 11, **characterized in that**
the distance meter (1) is designed to measure the pulse rate (P, 22) and to set the sampling rate (S) dependent on the measured pulse rate (P, 22), in particular by means of a phase-locked loop (6) or a synthesizer.

13. Distance meter (1) according any one of Claims 10 to 12,
**characterized in that**
the distance meter (1) has at least one independent clock generator (7) for generating an independent clock rate,

- wherein when the sampling functionality is executed, the sampling rate (S) and the pulse rate (P, 22) are set based on the clock rate, and/or
- so that the absolute frequency of the radiation (12) can be determined continuously on the basis of the clock rate, and the distance meter (1) is designed to continuously compute a sample-to-distance factor so that the distance determination is enabled with a scale error of less than 10ppm.

14. Distance meter (1) according to any one of Claims 10 to 13,
**characterized in that**

- the photosensitive electrical component (4) has a bandwidth in the gigahertz range, in particular wherein it is formed as an avalanche photodiode or single-photon avalanche photodiode array, and/or
- the distance meter (1) has a fibre-optic radiation amplifier and/or
- the distance meter (1) has an internal reference target (101), on the basis of which an optical reference path can be provided so that an absolute referencing of the distance determination is enabled.

15. Distance meter (1) according to any one of Claims 10 to 14,
**characterized in that**
to resolve ambiguities in determining the distance, the distance meter (1) has

- a modulator (19, 21) for modulating the laser pulses (12), in particular a variable optical attenuator (VOA) and/or a pulse picker, and/or
- an electro-optical phase shifter inside a cavity of the laser (2) for generating at least two different pulse sequence frequencies.

16. Distance meter (1) according to any one of Claims 10 to 15,
**characterized in that**
the distance meter (1) is designed for spectral interferometry as part of the distance determination, in particular wherein as part of the distance determination

- a frequency tuning of the pulse rate (P, 22) takes place so that interference between a reference pulse and a receive pulse (13, 13a, 13b) can be used by means of pulse overlap, and/or
- a spectral decomposition of the received pulses (13, 13a, 13b) takes place by means of a dispersive element, in particular a lattice or virtual imaged phased array, and intensity measurement by means of a camera of the distance meter (1) and/or
- a reduction of the pulse interval by means of a receive-side ring cavity of the distance meter (1) and/or
- a broadening of the pulse shape by means of an output-side Fabry-Perot cavity and lattice of the distance meter (1) takes place.

**Revendications**

1. Procédé de mesure de distance comprenant :

- une émission d'un rayonnement optique pulsé (12) avec une fréquence d'impulsions (P, 22), en particulier la fréquence d'impulsions (P, 22) étant d'au moins 1 MHz et/ou le rayonnement (12) étant généré par un laser à peigne de fréquences (2),
- une réception d'une partie du rayonnement optique (13, 13a, 13b) renvoyée par un objet cible (100) à l'aide d'un élément de réception électrique photosensible (4) et sa conversion en un signal de réception électrique (13a, 13b, 13c ... 13x),

- un échantillonnage du signal reçu (13a, 13b, 13c ... 13x) à une fréquence d'échantillonnage (S) pour générer des points d'échantillonnage (18a, 18b, 18c ... 18x),
- une évaluation d'un signal numérisé (13D) pour déterminer le temps de propagation du signal entre l'émission et la réception afin de déterminer la distance à partir du temps de propagation du signal,

**caractérisé en ce que**
la fréquence d'échantillonnage (S) est réglée en dépendance de la fréquence d'impulsions (P, 22) et le signal numérisé (13D) est généré par échantillonnage sur les signaux de réception (13a, 13b, 13c ... 13x) d'une pluralité x d'impulsions de rayonnement reçues (13), le taux d'échantillonnage (S) étant réglé dans un rapport tel avec la fréquence d'impulsions (P, 22) que le taux d'échantillonnage (S) est un multiple non entier de la fréquence d'impulsions (P, 22).

2. Procédé selon la revendication 1,
**caractérisé en ce que**
la fréquence d'échantillonnage (S) est au moins dix fois supérieure à la fréquence d'impulsions (P, 22).

3. Procédé selon la revendication 1 ou 2,
**caractérisé en ce que**
la fréquence d'impulsions (P, 22) est mesurée et la fréquence d'échantillonnage (S) est réglée en dépendance de la fréquence d'impulsion mesurée (P, 22).

4. Procédé selon l'une des revendications précédentes,
**caractérisé en ce que**
la fréquence d'impulsions (P, 22) et, adaptée à celle-ci, la fréquence d'échantillonnage (S) sont réglées à l'aide de fréquences d'horloge prédéfinies, générées en particulier au moyen d'un générateur d'horloge indépendant (7).

5. Procédé selon l'une des revendications précédentes,
**caractérisé en ce que**

- pour le rapport entre la fréquence d'échantillonnage (S) et la fréquence d'impulsions (P, 22), s'applique soit : fréquence d'échantillonnage = fréquence d'impulsions*(N+1/x), soit : fréquence d'échantillonnage = fréquence d'impulsions*(N-1/x), N étant un nombre naturel, et/ou
- la fréquence d'échantillonnage (S) est inférieure à la bande passante de l'unité de réception.

6. Procédé selon l'une des revendications précédentes,
**caractérisé en ce que**
le signal numérisé (13D) est généré par le fait que les points d'échantillonnage (18a, 18b, 18c ... 18x) de la pluralité x d'impulsions de rayonnement reçues (13)

- sont accumulés, en particulier sans association aux signaux de réception individuels (13a, 13b, 13c ... 13x), et/ou
- sont utilisés pour optimiser des valeurs de paramètres d'au moins un polynôme décrivant le signal (13D).

7. Procédé selon la revendication 6,
**caractérisé en ce que**
les points d'échantillonnage (18a, 18b, 18c ... 18x) se répètent selon la pluralité x et Mx points d'échantillonnage (18a, 18b, 18c ... 18x) sont utilisés pour générer le signal numérisé (13D), M étant un nombre naturel.

8. Procédé selon l'une des revendications précédentes,
**caractérisé en ce que**
la fréquence d'échantillonnage (S)

- est décalée par rapport à la fréquence d'impulsions (P, 22) d'une fraction inférieure à 1/x, en particulier d'au maximum un millionième, et/ou
- est réglée de manière algorithmique.

9. Procédé selon l'une des revendications précédentes,

15

**caractérisé en ce que**,
pour éviter des ambiguïtés lors de la détermination de distance, une modulation discrète et/ou analogique (23) d'une séquence d'impulsions de rayonnement (22) est effectuée, en particulier en déterminant le nombre d'impulsions de rayonnement (12, 13) entre l'émission et la réception.

10. Télémètre électro-optique (1), en particulier télémètre laser, comprenant :

- une source de rayonnement pour générer un rayonnement pulsé (12) avec une fréquence d'impulsions (P, 22),
- un objectif (14) et un composant photosensible (4), en particulier une photodiode, pour la réception d'une partie du rayonnement (13) renvoyée par un objet cible (100) et sa conversion en un signal de réception (13a, 13b, 13c ... 13x),
- un convertisseur analogique-numérique (5) pour générer des points d'échantillonnage (18a, 18b, 18c ... 18x) par échantillonnage du signal de réception (13a, 13b, 13c ... 13x) à une fréquence d'échantillonnage (S) et
- une unité d'évaluation électronique qui, sur la base d'un temps de propagation du signal, à l'aide d'un signal numérisé (13D), détermine une distance, en particulier absolue, entre le télémètre (1) et l'objet cible (100),

**caractérisé en ce que**
le télémètre (1) présente une fonctionnalité d'échantillonnage lors de l'exécution de laquelle la fréquence d'échantillonnage (S) est réglée en dépendance de la fréquence d'impulsions (P, 22) et le signal numérisé (13D) est généré par échantillonnage sur les signaux de réception (13a, 13b, 13c ... 13x) d'une pluralité x d'impulsions de rayonnement reçues (13), la fréquence d'échantillonnage (S) étant réglée dans un rapport tel avec la fréquence d'impulsions (P, 22) que la fréquence d'échantillonnage (S) est un multiple non entier de la fréquence d'impulsions (P, 22), en particulier la fréquence d'échantillonnage (S) étant au moins dix fois supérieure à la fréquence d'impulsions (P, 22).

11. Télémètre (1) selon la revendication 10,
**caractérisé en ce que**
la source de rayonnement est un laser à peigne de fréquences (2) relaxé non stabilisé en fréquence, en particulier

- conçu pour générer des impulsions de rayonnement (12) d'une durée d'impulsion comprise entre 100 fs et 10 ps et/ou
- conçu comme un laser à micro-peigne de fréquences avec un micro-résonateur monolithique.

12. Télémètre (1) selon la revendication 10 ou 11,
**caractérisé en ce que**
le télémètre (1) est conçu pour mesurer la fréquence d'impulsions (P, 22) et pour régler la fréquence d'échantillonnage (S) en dépendance de la fréquence d'impulsions (P, 22) mesurée, en particulier au moyen d'une boucle à verrouillage de phase (6) ou d'un synthétiseur.

13. Télémètre (1) selon l'une des revendications 10 à 12,
**caractérisé en ce que**
le télémètre (1) présente au moins un générateur d'horloge indépendant (7) pour générer une fréquence d'horloge indépendante,

- dans lequel, lors de l'exécution de la fonctionnalité d'échantillonnage, la fréquence d'échantillonnage (S) et la fréquence d'impulsions (P, 22) sont réglées sur la base de la fréquence d'horloge, et/ou
- de sorte que la fréquence absolue du rayonnement (12) peut être déterminée en continu à l'aide de la fréquence d'horloge, et le télémètre (1) est conçu pour calculer en continu un facteur échantillonnage-distance, de sorte que la détermination de distance est possible avec une erreur d'échelle inférieure à 10 ppm.

14. Télémètre (1) selon l'une des revendications 10 à 13,
**caractérisé en ce que**

- le composant électrique photosensible (4) présente une bande passante dans la gamme des gigahertz et est en particulier conçu comme une photodiode à avalanche ou un réseau de photodiodes à avalanche à photon unique, et/ou
- le télémètre (1) présente un amplificateur de rayonnement à fibre optique et/ou
- le télémètre (1) présente une cible de référence interne (101) à l'aide de laquelle un chemin optique de référence peut être fourni, de sorte qu'un référencement absolu de la détermination de distance est possible.

**15.** Télémètre (1) selon l'une des revendications 10 à 14,
**caractérisé en ce que**
pour résoudre des ambiguïtés lors de la détermination de la distance, le télémètre (1) présente :

- un modulateur (19, 21) pour moduler les impulsions laser (12), en particulier un atténuateur optique variable (VOA) et/ou un sélecteur d'impulsions, et/ou
- un déphaseur électro-optique à l'intérieur d'une cavité du laser (2) pour générer au moins deux fréquences de répétition d'impulsions différentes.

**16.** Télémètre (1) selon l'une des revendications 10 à 15,
**caractérisé en ce que**
le télémètre (1) est conçu pour l'interférométrie spectrale dans le cadre de la détermination de distance, en particulier dans le cadre de la détermination de la distance

- un accord de fréquence de la fréquence d'impulsions (P, 22) est effectué, de sorte que l'interférence entre une impulsion de référence et une impulsion reçue (13, 13a, 13b) peut être utilisée au moyen d'un chevauchement d'impulsions, et/ou
- une répartition spectrale des impulsions reçues (13, 13a, 13b) au moyen d'un élément dispersif, en particulier d'un réseau ou d'un réseau phasé à image virtuelle, et une mesure d'intensité au moyen d'une caméra du télémètre (1) et/ou
- une réduction de l'intervalle entre impulsions au moyen d'une cavité annulaire côté réception du télémètre (1) et/ou
- un élargissement de la forme d'impulsion au moyen d'une cavité Fabry-Pérot de découplage et d'un réseau du télémètre (1)

sont effectués.

Fig. 1a

Fig. 1b

Fig. 2

Fig. 3

Fig. 4

Fig. 5

Fig. 6

Fig. 7a

Fig. 7b

Fig. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009012646 A1